# EUROPÄISCHE PATENTSCHRIFT

(11) **EP 0 589 365 B1**
(45) Veröffentlichungstag und Bekanntmachung des Hinweises auf die Patenterteilung: **07.06.1995**
(21) Anmeldenummer: 93114999.1
(22) Anmeldetag: 17.09.1993
(51) Int. Cl.: B60G 7/02

(54) **Lagerung für Längslenker an Luftfederachsen**
Mounting for longitudinal arms in axles with pneumatic springs
Fixation des bras longitudinaux pour essieux à suspension pneumatique

(30) Priorität: 19.09.1992 DE 4231463
(43) Veröffentlichungstag der Anmeldung: 30.03.1994
(73) Patentinhaber: BPW Bergische Achsen Kommanditgesellschaft, 51674 Wiehl (DE)
(72) Erfinder: Pittius, Reinhold, Dr. Dipl.-Ing., D-51674 Wiehl (DE); Steiner, Helmut, Ing., D-51674 Wiehl (DE)
(74) Vertreter: Stenger, Watzke & Ring Patentanwälte

(56) Entgegenhaltungen:
- DE-A- 3 131 107
- DE-A- 3 318 288
- GB-A- 2 134 859
- US-A- 3 960 388
- US-A- 4 756 550
- US-A- 4 991 868

## Beschreibung

Die Erfindung betrifft eine Lagerung für Längslenker einer Luftfederachse eines Anhängers mit in Fahrtrichtung vorn unter einem Fahrzeugrahmen befestigten Stützen, die einen U-förmigen, nach hinten offenen Querschnitt haben und in denen jeweils ein Längslenker mittels eines Bolzens gelagert ist, wobei der Bolzen eine gegenüber den Seitenwänden der Stütze unverdrehbar gehaltene Silentbuchse trägt und seinerseits unverdrehbar durch an den Seitenwänden angeordnete Formbuchsen gelagert ist, von denen zumindest eine an ihrer Außenseite mit mindestens einem Nocken als Verdrehsicherung für den Kopf des Bolzens versehen ist und von denen beide an ihrer Innenseite mit einem Kragen versehen sind, der jeweils an einem Ende der Hülse der Silentbuchse kraftschlüssig anliegt.

Eine Längslenker-Lagerung der voranstehend beschriebenen Art für Luftfederachsen eines Anhängers ist aus der US-A-3 960 388 bekannt. Sie schafft zwar eine Verdrehsicherung sowohl des Lagerbolzens als auch der Silentbuchse, erfordert jedoch eine aufwendige Konstruktion und Montage.

Da es bei luftgefederten Fahrzeugachsen zur Vermeidung von zusätzlichen Spannungen in den Stützen und einer unerwünschten Verdrehung der Silentbuchse auf dem Bolzen und damit gegenüber der Stütze von großer Bedeutung ist, daß die Silentbuchsen der Längslenker spannungsfrei in die rahmenseitigen Stützen eingespannt werden, liegt der Erfindung die Aufgabe zugrunde, eine montage- und wartungsfreundliche Lagerung zu schaffen, die unter Aufrechterhaltung der Verdrehsicherung eine genauere Positionierung und bessere Übertragung der Einspannkräfte und -momente bei vereinfachter Montage ermöglicht.

Die Lösung dieser Aufgabenstellung durch die Erfindung ist dadurch gekennzeichnet, daß der Kragen das Ende der Hülse der Silentbuchse auch formschlüssig umgreift und in Seitenansicht der Formbuchse U-förmig und nach unten offen ist.

Die erfindungsgemäßen Formbuchsen, die sowohl als Lagerung für den Bolzen als auch als Verdrehsicherung einerseits für den Bolzen und andererseits für die Silentbuchse dienen, können auf einfache Weise in den Seitenwänden der Stützen exakt positioniert werden, wobei sie durch ihre Formgebung auf der Innenseite zugleich zu einer Montageerleichterung führen. Auf diese Weise wird nicht nur bei gleichzeitiger Montageerleichterung eine genauere Positionierung von Bolzen und Silentbuchse erreicht, sondern auch eine bessere Übertragung der Einspannkräfte und Einspannmomente bei gleichzeitiger Verringerung der Beanspruchung der Stützen.

Zur Verbesserung des Kraft- und Formschlusses können gemäß einem weiteren Merkmal der Erfindung die zueinander weisenden Flächen des Kragens und/oder der Hülse - vorzugsweise durch eine Riffelung - aufgerauht, mit einer Verzahnung oder mit Anlageflächen für diesen entsprechende Abflachungen der Hülse versehen sein. Weiterhin ist es erfindungsgemäß möglich, die Formbuchsen an der dem Kragen gegenüberliegenden offenen Seite mit einer Einführschräge zu versehen, welche die Montage erleichtert.

Um zu vermeiden, daß zwei unterschiedliche Formbuchsen verwendet werden müssen, sind gemäß einem heiteren Merkmal der Erfindung beide Formbuchsen an ihrer Außenseite mit mindestens einem Nocken versehen; in diesem Fall wird unter der Mutter des Bolzens eine mit ihrer Dicke mindestens der Höhe des Nockens entsprechende Unterlegscheibe angeordnet, die trotz des Vorhandenseins des Nockens ein Drehen der Mutter auf dem Gewinde des Bolzens ermöglicht. Auf diese Weise wird nicht nur die Herstellung und Lagerhaltung der nunmehr identischen Formbuchsen vereinfacht; es werden auch Montagefehler durch Vertauschen unterschiedlicher Formbuchsen vermieden. Die Unterlegscheibe wird vorzugsweise mit mindestens einer einem Nocken entsprechenden Abflachung versehen, um auch die Unterlegscheibe unverdrehbar festzulegen.

Die erfindungsgemäß ausgebildete Lagerung hat insgesamt den Vorteil einer präzisen Positionierung des Längslenkerauges mittels der Silentbuchse auf dem Bolzen in der Stütze, so daß eine nachträgliche Justierung der Achse zur Längsachse des Fahrgestelles nicht mehr erforderlich ist. Ein weiterer Vorteil besteht darin, daß die Montage der vormontieren Luftfederachse an den bereits angeschweißten Stützen beim Fahrzeugbauer erleichtert wird, weil die aus dem Auge der Längslenker herausragenden Enden der Hülse der Silentbuchse von den Innenseiten der Formbuchsen eingefangen werden, wodurch eine erhebliche Montagehilfe beim Einsetzen der Bolzen entsteht. Der wesentliche Vorteil besteht aber darin, daß die Silentbuchse durch den Kraft- und Formschluß der Enden ihrer Hülse mit den Innenseiten der Formbuchsen in einer bestimmten Einbaulage fixiert wird und dadurch die Pendelbewegungen des Längslenkers um diese Normallage herum in der Gummilage der Silentbuchse kompensiert werden, ohne daß es zu Verschleißerscheinungen zwischen den Enden der Hülse und den Formbuchsen kommt. Dadurch wird das Federungs- und Verschleißverhalten der erfindungsgemäß ausgebildeten Lagerung optimiert.

Auf der Zeichnung ist ein Ausführungsbeispiel einer erfindungsgemäßen Längslenkerlagerung dargestellt, und zwar zeigen:
- Fig. 1: eine Draufsicht auf eine Hälfte einer Luftfederachse,
- Fig. 2: eine Seitenansicht der Luftfederachse gemäß der Schnittlinie II - II in Fig. 1, jedoch mit getrennter Darstellung der Lagerstelle,
- Fig. 3: eine vergrößerte Darstellung der Stütze und des Längslenkerendes gemäß Fig. 2,
- Fig. 4: einen Querschnitt durch die Lagerung gemäß der Schnittlinie IV - IV in Fig. 3,
- Fig. 5: eine vergrößerte Darstellung der in Fig. 4 dargestellten Lagerung,
- Fig. 6: eine Innenansicht der Formbuchse,
- Fig. 7: eine Außenansicht der Formbuchse,
- Fig. 8: einen Schnitt durch die Formbuchse gemäß der Schnittlinie VIII - VIII in Fig. 6,
- Fig. 9: eine Innenansicht einer zweiten Ausführungsform einer mit einer Riffelung versehenen Formbuchse,
- Fig. 10: einen Schnitt durch die Formbuchse gemäß der Schnittlinie X - X in Fig. 9,
- Fig. 11: eine Innenansicht einer dritten Ausführungsform der Formbuchse mit parallelen Seitenwänden,
- Fig. 12: einen Schnitt durch die Formbuchse gemäß der Schnittlinie XII - XII in Fig. 11,
- Fig. 13: eine Innenansicht einer vierten Ausführungsform der Formbuchse mit einer konischen Verdrehsicherung und
- Fig. 14: einen Schnitt durch die Formbuchse gemäß der Schnittlinie XIV - XIV in Fig. 13.

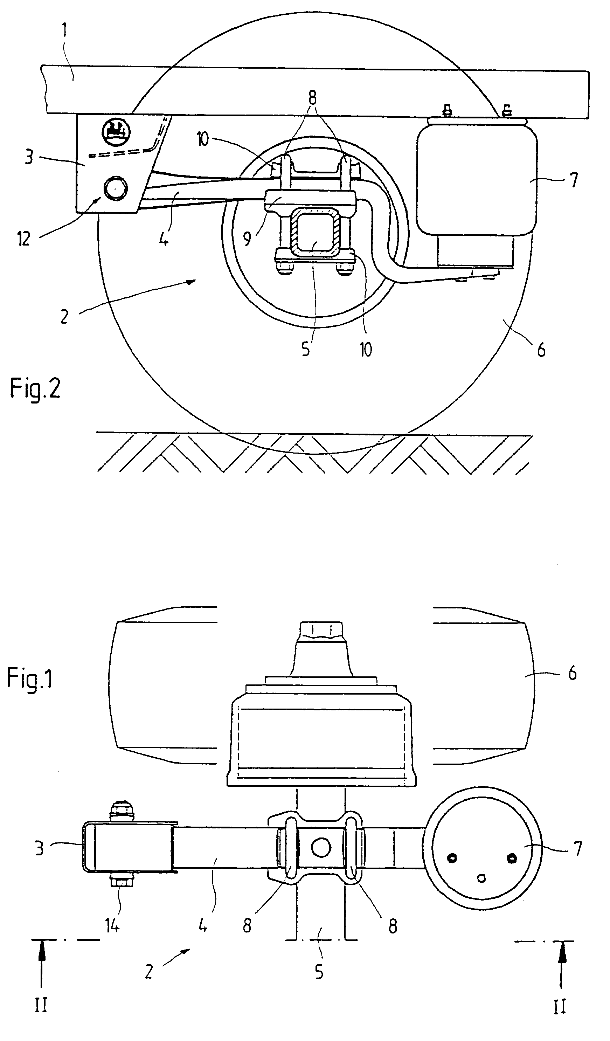

Die Figuren 1 und 2 zeigen eine unter einem Fahrzeugrahmen 1 angeordnete Luftfederachse 2, die im wesentlichen aus zwei am Fahrzeugrahmen 1 befestigten Stützen 3, zwei Längslenkern 4, einem daran befestigten Achskörper 5 mit Rädern 6 und auf den rückwärtigen Enden der Längslenker 4 abgestützten und unter dem Fahrzeugrahmen 1 befestigten Luftfederbälgen 7 besteht.

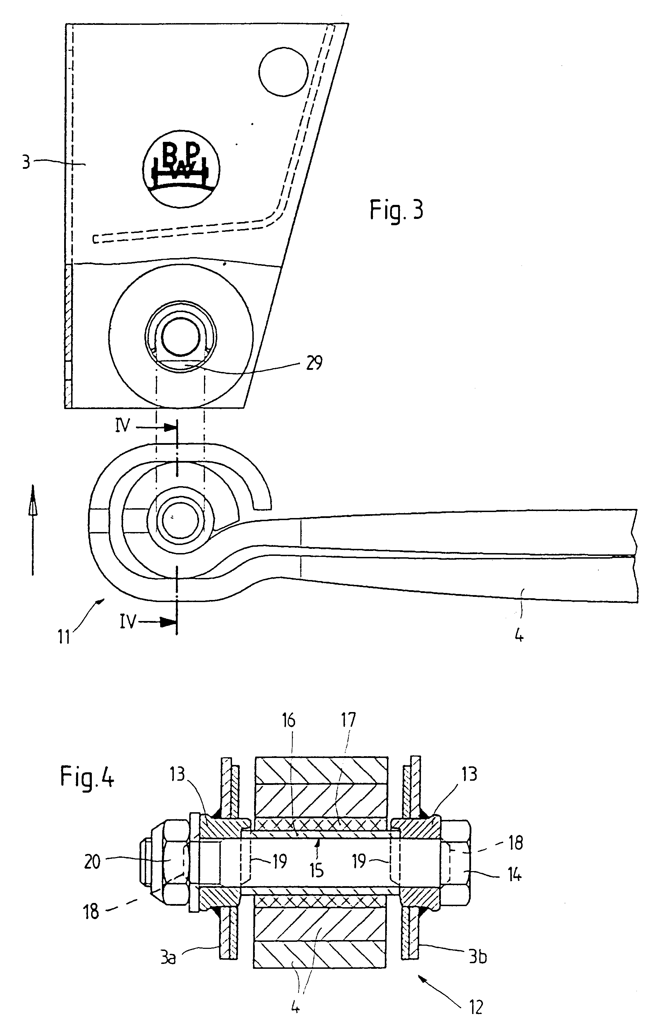

Die Längslenker 4 können - wie im dargestellten Ausführungsbeispiel - als Federlenker mit einem als Rarabelfeder ausgebildeten vorderen Federast, aber auch als starre, kastenförmige Konstruktion ausgebildet sein. Der Achskörper 5 ist mit Spannbügeln 8 unter Zwischenlage von Achslappen 9 und Formplatten 10 unter den Längslenkern 4 befestigt. Die vorderen Enden der Längslenker 4 sind mit einem Auge 11 (siehe Fig.3) an einer in jeder Stütze 3 angeordneten Lagerung 12 beweglich befestigt.

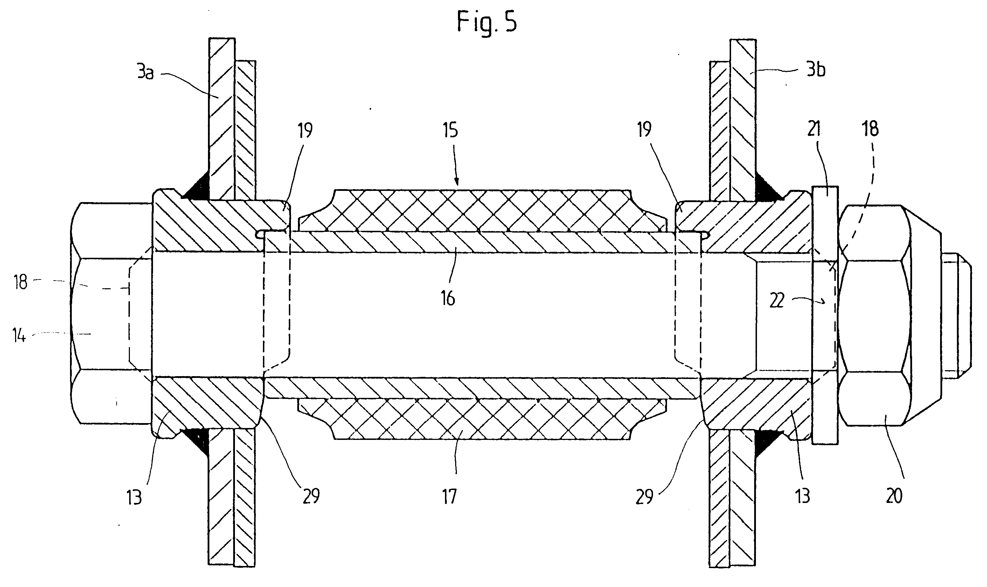

Bei der in den Fig. 4 und 5 dargestellten Lagerung 12 sind in die Seitenwände 3a und 3b der Stütze 3 Formbuchsen 13 für die Aufnahme eines Bolzens 14 eingeschweißt. Auf dem Bolzen 14 ist eine Silentbuchse 15 mit einer Hülse 16 und einem anvulkanisierten Gummikörper 17 angeordnet. Der Gummikörper 17 wird in das Auge 11 des Längslenkers 4 eingepreßt, um ein Rutschen zu verhindern.

An die Außenseiten der Formbuchsen 13 sind Nocken 18 als Verdrehsicherung für den Bolzen 14 angeformt. Auf der Innenseite der Formbuchsen 13 ist ein Kragen 19 angeformt, welcher im oberen Bereich der Kontur der Hülse 16 folgt und nach unten hin offen ist. Auf diese Weise können die in den Augen 11 der Längslenker 4 vormontierten Silentbuchsen 15 von unten her in die an den Seitenwänden 3a,3b der Stützen 3 befestigten Formbuchsen 13 eingesetzt und von diesen abgefangen werden, wenn die Montage bei Rückenlage des Fahrzeugrahmens erfolgt. Danach fluchtet die Bohrung der Hülse 16 mit den Bohrungen in den Formbuchsen 13, so daß der Bolzen 14 eingeschoben werden kann.

Das Verspannen des Bolzens 14 mit der darauf angeordneten Silentbuchse 15 in der Stütze 3 erfolgt mittels einer Mutter 20 unter Zwischenlage einer Unterlegscheibe 21, die an gegenüberliegenden Seiten mit Abflachungen 22 versehen ist, damit sie zwischen die Nocken 18 der Formbuchse 13 paßt und die Mutter 20 über die äußeren Enden der Nocken 18 hinweg gedreht werden kann.

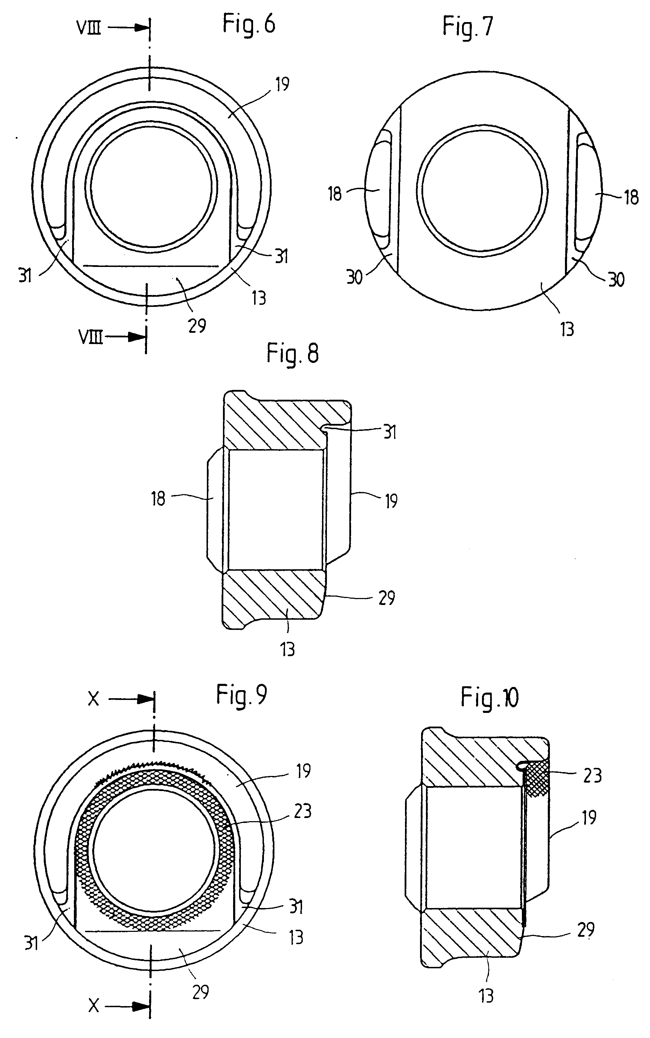

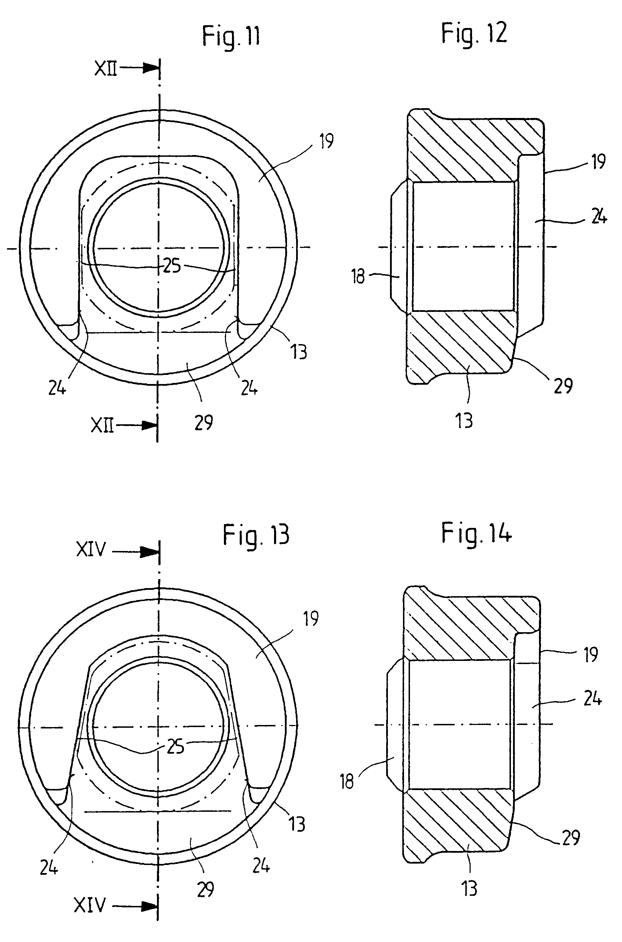

Nach dem Verspannen des Bolzens 14 in den Seitenwänden 3a,3b der Stütze 3 ist die Silentbuchse 15 kraft- und formschlüssig in den Formbuchsen 13 eingespannt. Nach oben und in Fahrtrichtung besteht Formschluß. Um den Kraftschluß zu den Innenseiten der Formbuchsen 13 zu verbessern, können diese gemäß Fig. 9 und 10 auf der Innenseite mit einer Riffelung 23 versehen sein. Im Normalfall reicht der durch die Riffelung 23 verbesserte Kraftschluß aus, um ein Verdrehen und das damit verbundene Reiben der Hülse 16 der Silentbuchse 15 in den Formbuchsen 13 zu vermeiden.

Für extreme Belastungen sind in den Fig. 11 bis 14 formschlüssige Verdrehsicherungen für die Hülse 16 in den Formbuchsen 13 dargestellt.

Bei der in den Fig. 11 und 12 dargestellten Verdrehsicherung sind die Innenseiten des Kragens 19 mit senkrechten und parallel zueinander verlaufenden Anlageflächen 24 und die Enden der Hülse 16 mit gegenüberliegenden, parallel zueinander verlaufenden Anlageflächen 25 versehen. Bei dem in den Fig. 13 und 14 dargestellten Ausführungsbeispiel der Verdrehsicherung konvergieren die Anlageflächen 24,25 und bilden eine nach unten sich konisch öffnende Aufnahme.

## Patentansprüche

1. Lagerung für Längslenker (4) einer Luftfederachse eines Anhängers mit in Fahrtrichtung vorn unter einem Fahrzeugrahmen (1) befestigten Stützen (3), die einen U-förmigen, nach hinten offenen Querschnitt haben und in denen jeweils ein Längslenker (4) mittels eines Bolzens (14) gelagert ist, wobei der Bolzen eine gegenüber den Seitenwänden (3a,3b) der Stütze (3) unverdrehbar gehaltene Silentbuchse (15) trägt und seinerseits unverdrehbar durch an den Seitenwänden (3a,3b) angeordnete Formbuchsen (13) gelagert ist, von denen zumindest eine an ihrer Außenseite mit mindestens einem Nocken (18) als Verdrehsicherung für den Kopf des Bolzens (14) versehen ist und von denen beide an ihrer Innenseite mit einem Kragen (19) versehen sind, der jeweils an einem Ende der Hülse der Silentbuchse (15) kraftschlüssig anliegt,
**dadurch gekennzeichnet,**
daß der Kragen (19) das Ende der Hülse (16) der Silentbuchse auch formschlüssig umgreift und in Seitenansicht der Formbuchse (13) U-förmig und nach unten offen ist.

2. Lagerung nach Anspruch 1, dadurch gekennzeichnet, daß die zueinander weisenden Flächen des Kragens (19) und/oder der Hülse (16) aufgerauht, vorzugsweise durch eine Riffelung (23), mit einer Verzahnung oder mit Anlageflächen für diesen entsprechende Abflachungen der Hülse (16) versehen sind.

3. Lagerung nach Anspruch 1 oder 2, dadurch gekennzeichnet, daß die Formbuchsen (13) an der dem Kragen (19) gegenüberliegenden offenen Seite mit einer Einführschräge (29) versehen sind.

4. Lagerung nach mindestens einem der Ansprüche 1 bis 3, dadurch gekennzeichnet, daß beide Formbuchsen (13) an ihrer Außenseite mit mindestens einem Nocken (18) versehen sind und daß unter der Mutter (20) des Bolzens (14) eine mit ihrer Dicke mindestens der Höhe des Nockens (18) entsprechende Unterlegscheibe (21) angeordnet ist.

5. Lagerung nach Anspruch 4, dadurch gekennzeichnet, daß die Unterlegscheibe (21) mit mindestens einer einem Nocken (18) entsprechenden Abflachung (22) versehen ist.

## Claims

1. Mounting for longitudinal arms (4) of a trailer axle with pneumatic springs, with supports (3) which are fixed towards the front in the direction of travel, underneath a vehicle frame (1), have a U-shaped cross-section open towards the rear and in each of which a longitudinal arm (4) is mounted by means of a bolt (14), the bolt supporting a silent bush (15) held in such a way as to be nonrotatable relative to the side walls (3a, 3b) of the support (3) and, for its part, being mounted nonrotatably by means of shaped bushes (13) arranged on the side walls (3a, 3b), at least one of which shaped bushes is provided at its outer end with at least one boss (18) as an anti-rotation safeguard for the head of the bolt (14) and both of which shaped bushes are provided at their inner ends with a collar (19), each resting in nonpositive engagement with one end of the sleeve of the silent bush (15), characterized in that the collar engages positively around the end of the sleeve (16) of the silent bush and is U-shaped and open towards the bottom in the side view of the shaped bush (13).

2. Mounting according to Claim 1, characterized in that the mutually facing faces of the collar (19) and/or of the sleeve (16) are roughened, preferably by means of knurling (23), or are provided with toothing or with bearing surfaces for corresponding flats on the sleeve (16).

3. Mounting according to Claim 1 or 2, characterized in that the shaped bushes (13) are provided at the open end, the end opposite the collar (19), with an insertion bevel (29).

4. Mounting according to at least one of Claims 1 to 3, characterized in that both shaped bushes (13) are provided at their outer end with at least one boss (18) and in that a washer (21) with a thickness corresponding at least to the height of the boss (18) is arranged under the nut (20) of the bolt (14).

5. Mounting according to Claim 4, characterized in that the washer (21) is provided with at least one flat (22) corresponding a boss (18).

## Revendications

1. Système de montage pour bras oscillants longitudinaux (4) d'un essieu à suspension pneumatique d'une remorque, comprenant des supports (3), qui sont fixés en avant en se référant au sens de marche, sous un châssis de véhicule (1), qui présentent une section transversale ouverte vers l'arrière, et dans chacun desquels est monté un bras oscillant longitudinal (4) au moyen d'un boulon (14), le boulon portant un manchon de support élastique (15) maintenu de manière fixe en rotation par rapport aux parois latérales (3a, 3b) du support (3), et étant pour sa part monté de manière arrêtée en rotation par des douilles de forme (13) disposées sur les parois latérales (3a, 3b), dont l'une au moins possède sur son côté extérieur, au moins un mentonnet (18) en guise d'arrêt en rotation pour la tête du bouton (14), et dont les deux sont pourvues sur leur côté intérieur, d'une collerette (19) qui s'appuie par adhérence sur chacune des extrémités du fourreau du manchon de support élastique (15),
caractérisé en ce que la collerette (19) enserre également par complémentarité de forme l'extrémité du fourreau (16) du manchon de support élastique, et présente une forme de "U" en étant ouverte vers le bas, en vue de côté de la douille de forme (13).

2. Système de montage selon la revendication 1, caractérisé en ce que les surfaces en regard l'une de l'autre de la collerette (19) et/ou du fourreau (16), sont rendues rugueuses, de préférence par des stries (23), sont pourvues d'une denture, ou bien munies de surfaces d'appui pour des méplats du fourreau (16), correspondant à celles-ci.

3. Système de montage selon la revendication 1 ou 2, caractérisé en ce que les douilles de forme (13) sont pourvues, sur le côté ouvert situé à l'opposé de la collerette (19), d'un chanfrein d'entrée (29).

4. Système de montage selon l'une des revendications 1 à 3, caractérisé en ce que les deux douilles de forme (13) sont pourvues sur leur côté extérieur, d'au moins un mentonnet (18), et en ce que sous l'écrou (20) du boulon (14) est disposée une rondelle d'appui (21) dont l'épaisseur correspond au moins à la hauteur du mentonnet (18).

5. Système de montage selon la revendication 4, caractérisé en ce que la rondelle d'appui (21) est pourvue d'au moins un méplat (22) correspondant à un mentonnet (18).
